# EUROPEAN PATENT SPECIFICATION

(11) **EP 3 434 104 B1**
(45) Date of publication and mention of the grant of the patent: **02.11.2022**
(21) Application number: 17382508.4
(22) Date of filing: 28.07.2017
(51) Int. Cl.: A01N 43/647, A01N 59/00, A01N 25/34, A01N 37/06, A01P 1/00

(54) **COMPRESSED TABLET FOR WATER DISINFECTION**
KOMPRIMIERTE TABLETTE FÜR WASSERDESINFEKTION
PASTILLE COMPRIMÉE POUR LA DÉSINFECTION DE L'EAU

(43) Date of publication of application: 30.01.2019
(73) Proprietor: Inquide, S.A.U., 08213 Polinyà (Barcelona) (ES)
(72) Inventor: JUNYENT LLADÓ, Jordi, 08213 POLINYÀ (Barcelona) (ES)
(74) Representative: Herrero & Asociados, S.L.

(56) References cited:
- JP-A- H0 827 119
- JP-A- 2003 246 998
- JP-A- 2006 131 546
- JP-A- 2006 160 978
- JP-A- 2008 189 560
- US-A1- 2010 323 009
- US-A1- 2011 027 330

## Description

### TECHNICAL FIELD OF THE INVENTION

The present invention relates to the field of swimming pool and/or spa water disinfection. More specifically, the present invention is related to compressed tablets for water disinfection comprising a disinfectant agent based on at least one halogenated derivative of isocyanuric acid and fumaric acid as lubricant/demolding agent. The invention is also directed to the process of preparation of such tablet and to the use thereof and in particular to a method for long-term disinfection of waters in swimming pools or spas by using such tablets.

### BACKGROUND OF THE INVENTION

Water soluble compressed tablets have been widely used in water disinfection of swimming pools and spas. Disinfection is achieved by the presence of one or more disinfectants in the composition of the tablets.

Several disinfectants have been used so far as active ingredients for tablet formulation. One type of said disinfectants are halogenated derivatives of isocyanuric acid, normally chlorinated derivatives, such as dichloroisocyanuric acid (DCCA), trichloroisocyanuric acid (TCCA) or salts thereof. These compounds when dissolved in water produce hypoclorous acid which due to it oxidizing strength has a biocide effect.

Tablet formulations containing TCCA or DCCA have already been disclosed. For instance, ES 2574332 discloses tablet compositions comprising a halogenated derivative of isocyanuric acid and volatile additive incompatible with the halogenated derivative of isocyanuric acid encapsulated in a microporous or mesoporous material.

US 20110027330 refers to a tablet compositions based on the in situ generation of chlorine dioxide as biocide, based on the combination of three basic elements, a low solubility free halogen donor, among which halogenated derivatives of isocyanuric acid are mentioned, an acid source and a chlorite donor. These elements or reactants must be coated with a non-hygroscopic material and then compacted into a tablet.

In order to produce their effect, the chlorinated derivatives of isocyanuric acid must be released from the tablet and dissolved in water, in order to produce hypoclorous acid. The dissolution rate will depend on the way the tablet disintegrates in contact with the water and this has very much to do with the active ingredients itself and the excipients used in the formulation.

Boric acid is an excipient that has been commonly used in tablet formulations for water disinfection because of its lubricant/demolding capacity as well as for its flame retardant properties. Nevertheless, this compound has been recently classified as toxic for human reproduction and as an SVHC (substance of very high concern) because of its potential risk for health.

Therefore, there is a need to develop new formulations of halogenated derivatives of isocyanuric acid such as dichloroisocyanuric acid (DCCA), Trichloroisocyanuric acid (TCCA) or salts thereof in the form of compressed tablet, more innocuous and safer and being suitable for swimming pool and spas sanitation.

The authors of the present invention have found that the use of fumaric acid which is a less toxic compound, in the context of tablet formulations of halogenated derivatives of isocyanuric acid not only represents a good substituent of boric acid as lubricant/demoulding agent, but surprisingly, it leads to a slow dissolution rate of the active ingredient and so to a sustained release thereof. This results in an improved long-lasting disinfecting effect of the tablets of present invention.

JP 2008189560 and JPH0827119 both disclose formulations containing halogenated derivatives of isocyanuric acid and fumaric acid but the amount in which these elements are present in the formulations disclosed in these documents is far removed from that of the tablets of the present invention.

### BRIEF DESCRIPTION OF THE FIGURES

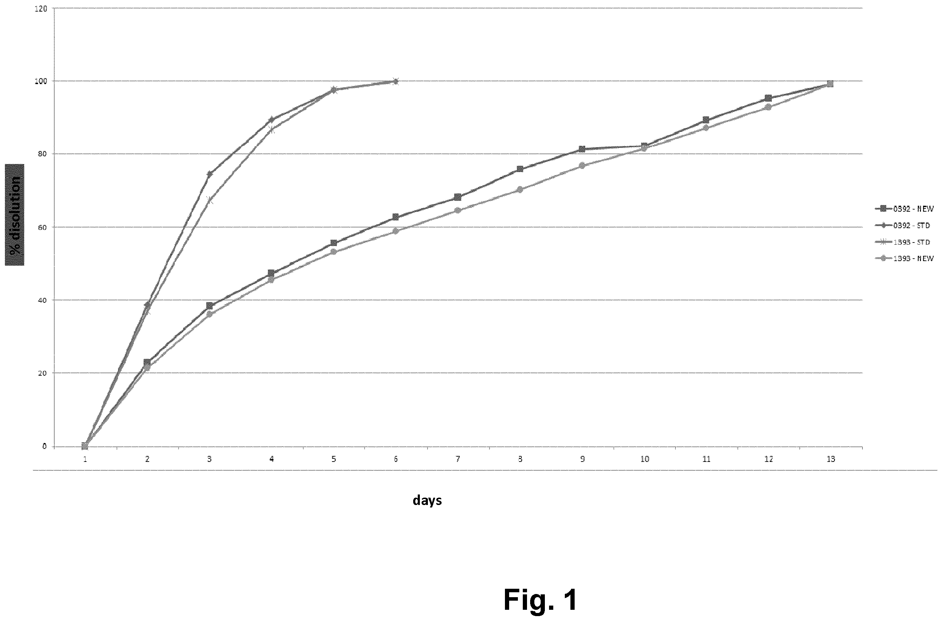

**Figure** 1: represents a comparative assay of the dissolution rate of 2 tablet containing fumaric acid according to the invention 0392-NEW (corresponding to composition 3 of example 1) and 1393-NEW (corresponding to composition 4 of example 1) with two tablets with boric acid (their composition is disclosed in example 2). The figure clearly shows that tablets with fumaric acid have a dissolution profile more sustained in time than the tablets with boric acid leading to long-lasting treatments.

### DESCRIPTION OF THE INVENTION

In a first aspect, the present invention is directed to a compressed tablet for water disinfection comprising in its composition:
a) a disinfectant based on at least one halogenated derivative of isocyanuric acid present in an amount of 75 to 97% by weight in the total composition, and
b) fumaric acid as lubricant present in an amount of 0.1 to 6.5% by weight in the total composition
wherein the halogenated derivative of isocyanuric acid is selected from dichloroisocyanuric acid (TCCA), trichloroisocyanuric acid (DCCA), their salts or mixtures thereof.

Thus, the first essential element of the invention is the presence of at least one halogenated derivative of isocyanuric acid selected from is DCCA, TCCA, their salts or mixtures thereof in the composition of the tablet. The salts of halogenated derivative of isocyanuric acid can be selected, but not in a limiting manner, from anhydrous sodium dichloroisocyanurate or dihydrate sodium dichloroisocyanurate or potassium dichloroisocyanurate.

The halogenated derivative of isocyanuric acid is present in the formulation of the compressed tablet in an amount of 75 to 97% by weight in the total composition and even more preferably from 80 to 95% by weight of the total composition.

Although in a preferred embodiment of the invention the disinfectant is based or consists only in the presence as active ingredient of one or more halogenated derivative of isocyanuric acid selected from TCCA, DCCA or their salts, the disinfectant can also contain other active ingredients. In addition, of the at least one halogenated derivative of isocyanuric acid, selected from TCCA, DCCA, their salts or mixtures thereof, the tableted composition of the invention can optionally contain other disinfectant agents. Optional disinfectants that can be used in the composition of the tablets of the invention can be selected from, but not limited to lithium hypochlorite; sodium hypochlorite; perborate; sodium persulfate; potassium persulfate; potassium monopersulfate; sodium monopersulfate; halogenated hydantoins such as, 1,3-dichloro-5,5-dimethylhydantoin (DCDMH), 1,3-dibromo-5,5-dimethylhydantoin (DBDMH), 1-bromo-3-chloro-5,5-dimethylhydantoin (BCDMH), 1,3-dichloro-5-ethyl-5-methylhydantoin (DCEMH), 1,3-dibromo-5-ethyl-5-methylhydantoin (DBEMH) and 1-bromo-3-chloro-5-methyl-5-ethylhydantoin (BCEMH); or mixtures thereof.

The tableted composition of the invention cannot contain any chlorite donor understood as a substance that contributes chlorite anions having formula ClO₂⁻when dissolved in water. Examples of chlorite donors are sodium chlorite, magnesium chlorite, calcium chlorite as well as other alkali metal chlorite salts. The reason is that ClO₂⁻ reacts with hypochlorous or hypobromous acid resulting from dissolution of the halogenated derivative of isocyanuric acid to generate chlorine dioxide. This reaction is expressly unwished in the context of this invention since the biocide action sought is mainly based on the action of hypochlorous or hypobromous acid resulting from dissolution of the halogenated derivative of isocyanuric acid.

Fumaric acid is the second essential element of the invention. It acts as a lubricant favoring demolding of the tablets in contact with water but additionally, as demonstrated in the examples below, it shows a synergistic effect in the dissolution rate of the halogenated derivative of isocyanuric acid, leading to a more sustained release of it and to a longer action thereof.

Fumaric acid can be present in the formulation of the tablet in an amount of 0.1 to 6.5% by weight in the total composition and even more preferably from 0.3 to 5% by weight of the total composition.

Also, in a specially preferred embodiment of the invention, the compressed tablet also comprises in its composition magnesium carbonate. This element provides to the composition not oxidizing properties that lead to flame retardancy. Magnesium carbonate can be present in the formulation of the compressed tablet in an amount of 0.01 to 15% by weight in the total composition, preferably 0.01 to 1.5% by weight in the total composition, more preferably from 0.1 to 1% by weight in the total composition and even more preferably from 0.2 to 0,8% by weight of the total composition.

Optionally, the compressed tablet of the present invention may comprise in its composition one or more further additives selected from clarifiers and flocculants, chlorine stabilizers, chelating agents, sequestrants, water softeners, algaecides, algaestats, corrosion inhibitors, scale inhibitors, disintegrants, dispersants, colorants, dissolution control agents, fragrances or surfactants.

Clarifiers and flocculants have the purpose of removing small particles dispersed in the pool that can give a cloudy aspect to water. Several clarifiers and flocculants can be used in the tablets of the present invention. They can be selected, but not in a limited manner, from aluminum sulfate, sodium alginate, modified starchs, sodium Aluminate, aluminum chloride, aluminum polyhydroxichloride and aluminum polyhydroxichlorosulfate, iron chloride, poly(dialyldimethylamonium chloride), aluminum polyhydroxichlorosilicate, sodium silicate or mixtures thereof.

It is general practice to include in tableted compositions at least one chlorine stabilizer that helps in protecting active chlorine produced from TCCA, DCCA or their salts from degradation by UV radiation, especially in outdoors swimming pools. The most common used chlorine stabilizer is cyanuric acid although any other chlorine stabilizer can of course be used. Thus in a particular embodiment of the invention the tableted composition comprises a chlorine stabilizer and more particularly cyanuric acid.

Chelating agents, sequestrants and water softeners have the aim of removing certain metal ions from water. Any of these can be optionally present in the tableted composition. They can be selected, but not limited to phosphonic acid salts (HEDP salt), 2-phosphonobutane-1,2,4-tricarboxylic acid salts (PBTC salts), aminotrismethylenephosphonic acid salts (ATMP alts), citric acid, EDTA, NTA or tripolyphosphates or mixtures thereof.

Algaecides and algaestats are sought to control algae populations in waters from swimming pools and spas and they can optionally be present in the tablets of the invention. In the context of the present invention, they can be selected but not limited to copper sulfate, quaternary ammonium derivatives or quaternary ammonium polymeric derivatives or mixtures thereof.

Different corrosion and scale inhibitors can also be optionally used in the preparation of the tablet of the invention. For instance these can be selected, but not limited to sodium silicate, calcium bis-dihydrogenphosphate, potassium dihydrogenphosphate, zinc dihydrogenphosphate, tripotassic phosphate, trisodium phosphate, potassium hydrogenphosphate, sodium hydrogenphosphate, tetrasodic pyrophosphate, sodium and calcium polyphosphate, HEDP or mixtures thereof.

Alginates or cellulose and its derivatives such as sodium carboxy methyl cellulose or microcrystalline cellulose can optionally be used among others as disintegrants, dispersants and dissolution control agents.

In a particularly preferred embodiment of the invention, the compressed tablet compositions comprises:
a) from 80 to 95% by weight of the total composition of halogenated derivative of isocyanuric acid selected from TCCA, DCCA, their salts or mixtures thereof,
b) from 0.3 to 6.5% by weight of the total composition of fumaric acid,
c) from 0.2 to 0.8% by weight of the total composition of magnesium carbonate,
d) optionally from 2 to 10% by weight of the total composition of cyanuric acid.

Another particularly preferred embodiment of the invention is represented by a compressed tablet composition comprising:
a) from 80 to 95% by weight of the total composition of halogenated derivative of isocyanuric acid selected from TCCA, DCCA, their salts or mixtures thereof,
b) from 0.3 to 6.5% by weight of the total composition of fumaric acid,
c) from 0.2 to 0.8% by weight of the total composition of magnesium carbonate,
d) from 2 to 10% by weight of the total composition of cyanuric acid.

Still another particularly preferred embodiment of the invention is that of a compressed tablet composition comprising:
a) from 80 to 95% by weight of the total composition of halogenated derivative of isocyanuric acid selected from TCCA, DCCA, their salts or mixtures thereof,
b) from 0.3 to 6.5% by weight of the total composition of fumaric acid,
c) from 0.2 to 0.8% by weight of the total composition of magnesium carbonate,
d) from 2 to 10% by weight of the total composition of cyanuric acid.
e) from 3 to 10% by weight of the total composition of aluminum sulfate hydrate,
f) from 0.2 to 1.2% by weight of the total composition of copper sulfate pentahydrate,
g) optionally from 0.1 to 0.8% by weight of the total composition of a phosphonic acid salt.

The tablets of the invention can be in prepared in different formats depending on the type of swimming pool or spa and especially in the volume of water that needs to be treated. The format may vary widely in its geometrical shape, volume and weight of the compressed tablet. For instance, the tablets may be round-shape, squared, rectangular or in the form of stick or pellets.

In a particular embodiment, the tablets are in a format of 2 gr to up to 700 gr tablets more preferably from 20 gr to up 600 gr tablets.

Another aspect of the invention is related to a process for preparation of a compressed tablet as described before, said process comprising:
a) mixing all the components of the composition and
b) compacting the mixture under pressure conditions.

In step a) the solid components are added in a mixing hopper starting from those representing the higher weight percent of the mixture to the less abundant. The components must be mixed until a good homogenization before the compacting step.

The compacting step can be performed in any common eccentric, hydraulic or rotative compacting machine. Depending on the compactor used and the shape of the tablet the mean compacting pressure can reach up to 40 KN/cm².

Still another aspect of the invention is the use of the compressed tablets for water disinfection and more particularly to its use in a method for long-term disinfection of water in swimming pools or spas.

The compressed tablets of the invention produce a substantially better sustained release and dissolution of the active ingredient than the corresponding tablets with boric acid instead of fumaric acid. As demonstrated in example 2 below the tablet with boric acid reaches a dissolution of 100% in about 6 days whereas a tablet according to the invention reach such dissolution in around 13 days. Therefore, the compressed tablets of the invention provide effective disinfection for longer periods of time.

The method for long-term disinfection of waters in swimming pools or spas according to the invention comprises:
a) Putting one or more tablets according to the invention in the skimmer dispensers by-passing the filter, floating dispensers or simply in the water in a proportion of 200 gr to 300 gr per every 25 m³ of water, more preferably 225 gr to 275 gr per every 25 m³ of water and even more preferably in a proportion of 240-260 gr per every 25 m³ of water, and
b) making the water flow through the skimmer to dissolve the tablets.

By means of this method swimming pool or spa are disinfected for long periods of time. The use of fumaric acid in the tablets of the invention almost doubles the time the tablets conserved their disinfectant activity.

The invention will be described in more detail by means of the following examples. The description below discloses some embodiments and examples of the invention in such detail that a person skilled in the art is able to utilize the invention based on the disclosure. Not all the steps of the embodiments are disclosed in detail, as many of them will be obvious for a person skilled in the art.

### EXAMPLES

### EXAMPLE 1: Preparation of different types of compressed tablets according to the invention.

Tablets according to the invention of 20g to 600 g were produce using the following compositions where the proportion of each component is expressed in percentage by weight of the total composition:

### Composition 1:

TCCA: 94.25%
Magnesium carbonate: 0.25%
Cyanuric acid: 5%
Fumaric acid: 0.5%

### Composition 2:

TCCA: 86%
Magnesium carbonate: 9%
Cyanuric acid: 0.25%
Fumaric acid: 4.75%

### Composition 3:

TCCA: 92%
Magnesium carbonate: 0.25%
Cyanuric acid: 2,75%
Fumaric acid: 0.5%
Aluminum Sulfate Hydrate: 3,5%
Copper sulfate pentahydrate: 1%

### Composition 4:

TCCA: 84%
Magnesium carbonate: 0.25%
Cyanuric acid: 5.25%
Fumaric acid: 0.5%
Aluminum sulfate hydrate: 9.6%
Copper sulfate pentahydrate: 0.4%

### Composition 5:

TCCA: 91.5%
Magnesium carbonate: 0.25%
Cyanuric acid: 2.75%
Fumaric acid: 0.5%
Aluminum sulfate hydrate: 3.5%
Copper sulfate pentahydrate: 1%
Fosfonic acid salt: 0.5%

### Composition 6:

TCCA: 83.7%
Magnesium carbonate: 0.25%
Cyanuric acid: 5.25%
Fumaric acid: 0.5%
Aluminum sulfate hydrate: 9.6%
Copper sulfate pentahydrate: 0.4%
Fosfonic acid salt: 0.3%

For the preparation of the tablets with the above compositions the components were mixed in a mixing hopper. First the components with higher percentage by weight in the mixture were added followed by those less abundant until a homogeneous mixture is reached. Then the mixture was compacted in a compactor under a pressure of 40 KN/cm² to obtain round-shaped tablets.

### EXAMPLE 2: Sustained release and dissolution rate of the tablet of the invention

Compositions 3 and 4 described in Example 1 were tested in a dissolution test for assessing their dissolution rate.

Testings were carried out in an outdoor swimming-pool of 45 m³ with skimmer and a silex-type filtration. Filtration was made for 7 hours per day and the temperature of the water was kept at 25-27°C for the whole assays.

In order to assess the effect of fumaric acid in the dissolution rate, comparative dissolution test were carried out with the following composition comprising boric acid instead of fumaric acid:.

### 0392-STD:

TCCA: 92%
Boric acid: 4.5%
Aluminum Sulfate Hydrate: 2,5%
Copper sulfate pentahydrate: 1%

### 1393-STD:

TCCA: 84%
Boric acid: 5%
Aluminum Sulfate Hydrate: 9%
Copper sulfate pentahydrate: 0.5%
Cyanuric acid: 1.5%

The comparative results are shown in figure 1. This figure clearly shows that tablets with fumaric acid according to the invention (0392-New corresponds to composition 3 of example 1 and 1893-New to composition 4) have a dissolution profile more sustained in time than the tablets with boric acid. Whereas the latter have dissolved half of the TCCA in about 2-3 days and 100% of it in about 6 days, the tablets of the invention show dissolution of half of the TCCA in 4-5 days and reach 100% of dissolution in 13 days. The sustained release profile of the tablets of the invention has the clear advantage that active ingredient will be delivered in the water for longer periods of time.

## Claims

1. A compressed tablet for water disinfection comprising in its composition:
a) a disinfectant based on at least one halogenated derivative of isocyanuric acid, present in an amount of 75 to 97% by weight in the total composition and
b) fumaric acid as lubricant present in an amount of 0.1 to 6.5% by weight in the total composition
wherein the halogenated derivative of isocyanuric acid is selected from dichloroisocyanuric acid (TCCA), trichloroisocyanuric acid (DCCA), their salts or mixtures thereof.

2. A tablet according to any of the previous claims wherein the halogenated derivative of isocyanuric acid is present in an amount of 80 to 95% by weight of the total composition.

3. A tablet according to any of the previous claims wherein the fumaric acid is present in an amount of 0.3 to 5% by weight of the total composition.

4. A tablet according to any of the previous claims further comprising magnesium carbonate.

5. A tablet according to claim 4 wherein magnesium carbonate is present in an amount of 0.01 to 15% by weight in the total composition more preferably from 0.1 to 1% by weight in the total composition and even more preferably from 0.2 to 0.8% by weight of the total composition.

6. A tablet according to any of the previous claims further comprising one or more additional additives selected from clarifiers and flocculants, chlorine stabilizers, chelating agents, sequestrants, algaecides, algaestats, water softeners, corrosion inhibitors, scale inhibitors, disintegrants, dispersants, colorants, dissolution control agents, fragrances or surfactants.

7. A tablet according to any of previous claims comprising:
a) from 80 to 95% by weight of the total composition of halogenated derivative of isocyanuric acid selected from TCCA, DCCA, their salts or mixtures thereof,
b) from 0.3 to 6.5% by weight of the total composition of fumaric acid,
c) from 0.2 to 0.8% by weight of the total composition of magnesium carbonate,
d) optionally from 2 to 10% by weight of the total composition of cyanuric acid.

8. A tablet according to claim 4 comprising:
a) from 80 to 95% by weight of the total composition of halogenated derivative of isocyanuric acid selected from TCCA, DCCA, their salts or mixtures thereof,
b) from 0.3 to 6.5% by weight of the total composition of fumaric acid,
c) from 0.2 to 0.8% by weight of the total composition of magnesium carbonate,
d) from 2 to 10% by weight of the total composition of cyanuric acid.

9. A tablet according to claim 7 further comprising:
e) from 3 to 10% by weight of the total composition of aluminum sulfate hydrate,
f) from 0.2 to 1.2% by weight of the total composition of copper sulfate pentahydrate,
g) optionally from 0.1 to 0.8% by weight of the total composition of a phosphonic acid salt.

10. A tablet according to any of previous claims being in a format of 2 gr to up to 700 gr tablets, more preferably from 20 gr to up 600 gr tablets.

11. A process for preparation of a tablet according to any of claims 1 to 10 comprising:
a) mixing all the components of the composition and
b) compacting the mixture under pressure conditions.

12. Use of a tablet according to any of claims 1-10 for water disinfection.

13. The use according to claim 12 wherein water disinfection is carried out in swimming pool or spas.

14. A method for long-term disinfection of waters in swimming pools or spas comprising:
a) Putting one or more tablets according to any of claims 1 to 10 in the skimmer, dispensers by-passing the filter, floating dispensers or simply in the water in a proportion of 200 gr to 300 gr per every 25 m³ of water, more preferably 225 gr to 275 gr per every 25 m³ of water and even more preferably in a proportion of 240-260 gr per every 25 m³ of water, and
b) making the water flow through the skimmer to dissolve the tablets.

## Patentansprüche

1. Komprimierte Tablette zur Wasserdesinfektion, die in ihrer Zusammensetzung umfasst:
a) ein Desinfektionsmittel auf der Basis mindestens eines halogenierten Derivats der Isocyanursäure, das in einer Menge von 75 bis 97 Gew.-% der Gesamtzusammensetzung vorhanden ist, und
b) Fumarsäure als Schmiermittel, die in einer Menge von 0,1 bis 6,5 Gew.-% in der Gesamtzusammensetzung vorhanden ist,
wobei das halogenierte Derivat der Isocyanursäure ausgewählt ist aus Dichlorisocyanursäure (TCCA), Trichlorisocyanursäure (DCCA), deren Salzen oder Mischungen davon.

2. Tablette nach einem der vorhergehenden Ansprüche, wobei das halogenierte Derivat von Isocyanursäure in einer Menge von 80 bis 95 Gew.-% der Gesamtzusammensetzung vorhanden ist.

3. Tablette nach einem der vorhergehenden Ansprüche, wobei die Fumarsäure in einer Menge von 0,3 bis 5 Gew.-% der Gesamtzusammensetzung vorhanden ist.

4. Tablette nach einem der vorhergehenden Ansprüche, die außerdem Magnesiumcarbonat enthält.

5. Tablette nach Anspruch 4, wobei Magnesiumcarbonat in einer Menge von 0,01 bis 15 Gew.-% der Gesamtzusammensetzung, bevorzugter von 0,1 bis 1 Gew.-% der Gesamtzusammensetzung und noch bevorzugter von 0,2 bis 0,8 Gew.-% der Gesamtzusammensetzung vorhanden ist.

6. Tablette nach einem der vorhergehenden Ansprüche, die ferner ein oder mehrere zusätzliche Additive enthält, die aus Klärmitteln und Flockungsmitteln, Chlorstabilisatoren, Chelatbildnern, Sequestriermitteln, Algiziden, Algestatika, Wasserenthärtern, Korrosionsinhibitoren, Kesselsteininhibitoren, Desintegrationsmitteln, Dispergiermitteln, Farbstoffen, Auflösungskontrollmitteln, Duftstoffen oder Tensiden ausgewählt sind.

7. Tablette nach einem der vorhergehenden Ansprüche, umfassend:
a) 80 bis 95 Gew.-% der Gesamtzusammensetzung eines halogenierten Derivats der Isocyanursäure, ausgewählt aus TCCA, DCCA, deren Salzen oder Gemischen davon,
b) von 0,3 bis 6,5 Gew.-% der Gesamtzusammensetzung an Fumarsäure,
c) 0,2 bis 0,8 Gew.-% der Gesamtzusammensetzung an Magnesiumcarbonat,
d) optional 2 bis 10 Gew.-% der Gesamtzusammensetzung an Cyanursäure.

8. Tablette nach Anspruch 4, umfassend:
a) 80 bis 95 Gew.-% der Gesamtzusammensetzung eines halogenierten Derivats der Isocyanursäure, ausgewählt aus TCCA, DCCA, ihren Salzen oder Gemischen davon,
b) von 0,3 bis 6,5 Gew.-% der Gesamtzusammensetzung an Fumarsäure,
c) von 0,2 bis 0,8 Gew.-% der Gesamtzusammensetzung an Magnesiumcarbonat,
d) 2 bis 10 Gew.-% der Gesamtzusammensetzung an Cyanursäure.

9. Tablette nach Anspruch 7, ferner umfassend:
e) 3 bis 10 Gew.-% der Gesamtzusammensetzung an Aluminiumsulfathydrat,
f) 0,2 bis 1,2 Gew.-% der Gesamtzusammensetzung an Kupfersulat-Pentahydrat,
g) optional 0,1 bis 0,8 Gew.-% der Gesamtzusammensetzung an einem Phosphonsäuresalz.

10. Tablette nach einem der vorhergehenden Ansprüche in einem Format von 2 g bis zu 700 g Tabletten, bevorzugt von 20 g bis zu 600 g Tabletten.

11. Verfahren zur Herstellung einer Tablette nach einem der Ansprüche 1 bis 10, umfassend:
a) Mischen aller Komponenten der Zusammensetzung und
b) Verdichten der Mischung unter Druckbedingungen.

12. Verwendung einer Tablette nach einem der Ansprüche 1 bis 10 zur Wasserdesinfektion.

13. Verwendung nach Anspruch 12, wobei die Wasserdesinfektion in Schwimmbädern oder Spas durchgeführt wird.

14. Verfahren zur Langzeitdesinfektion von Wasser in Schwimmbädern oder Spas, umfassend:
a) Einbringen einer oder mehrerer Tabletten nach einem der Ansprüche 1 bis 11 in den Skimmer, in Spender, die den Filter umgehen, in schwimmende Spender oder einfach in das Wasser in einem Verhältnis von 200 g bis 300 g pro 25 m³ Wasser, bevorzugt 225 g bis 275 g pro 25 m³ Wasser und noch bevorzugter in einem Verhältnis von 240-260 g pro 25 m³ Wasser, und
b) Fließen lassen des Wassers durch den Skimmer, um die Tabletten aufzulösen.

## Revendications

1. Pastille comprimée pour la désinfection d'eau comprenant dans sa composition :
a) un désinfectant basé sur au moins un dérivé halogéné d'acide isocyanurique, présent en une quantité de 75 à 97 % en poids dans la composition totale et
b) de l'acide fumarique en tant que lubrifiant présent en une quantité de 0,1 à 6,5 % en poids dans la composition totale
dans laquelle le dérivé halogéné d'acide isocyanurique est sélectionné parmi l'acide dichloroisocyanurique (TCCA), l'acide trichloroisocyanurique (DCCA), leurs sels ou des mélanges de ceux-ci.

2. Pastille selon l'une quelconque des revendications précédentes dans laquelle le dérivé halogéné d'acide isocyanurique est présent en une quantité de 80 à 95 % en poids de la composition totale.

3. Pastille selon l'une quelconque des revendications précédentes dans laquelle l'acide fumarique est présent en une quantité de 0,3 à 5 % en poids de la composition totale.

4. Pastille selon l'une quelconque des revendications précédentes comprenant en outre du carbonate de magnésium.

5. Pastille selon la revendication 4 dans laquelle du carbonate de magnésium est présent en une quantité de 0,01 à 15 % en poids dans la composition totale de manière davantage préférée de 0,1 à 1 % en poids dans la composition totale et de manière encore davantage préférée de 0,2 à 0,8 % en poids de la composition totale.

6. Pastille selon l'une quelconque des revendications précédentes comprenant en outre un ou plusieurs additifs supplémentaires sélectionnés parmi des clarificateurs et des floculants, des stabilisateurs de chlore, des agents chélateurs, des séquestrants, des algicides, des agents algistatiques, des adoucisseurs d'eau, des inhibiteurs de corrosion, des inhibiteurs de tartre, des désintégrants, des dispersants, des colorants, des agents de régulation de la dissolution, des parfums ou des tensioactifs.

7. Pastille selon l'une quelconque des revendications précédentes comprenant :
a) de 80 à 95 % en poids de la composition totale de dérivé halogéné d'acide isocyanurique sélectionné parmi le TCCA, le DCCA, leurs sels ou des mélanges de ceux-ci,
b) 0,3 à 6,5 % en poids de la composition totale d'acide fumarique,
c) de 0,2 à 0,8 % en poids de la composition totale de carbonate de magnésium,
d) facultativement de 2 à 10 % en poids de la composition totale d'acide cyanurique.

8. Pastille selon la revendication 4 comprenant :
a) de 80 à 95 % en poids de la composition totale de dérivé halogéné d'acide isocyanurique sélectionné parmi le TCCA, le DCCA, leurs sels ou des mélanges de ceux-ci,
b) 0,3 à 6,5 % en poids de la composition totale d'acide fumarique,
c) de 0,2 à 0,8 % en poids de la composition totale de carbonate de magnésium,
d) de 2 à 10 % en poids de la composition totale d'acide cyanurique.

9. Pastille selon la revendication 7 comprenant en outre :
e) de 3 à 10 % en poids de la composition totale de sulfate d'aluminium hydraté,
f) de 0,2 à 1,2 % en poids de la composition totale de sulfate de cuivre pentahydraté,
g) facultativement de 0,1 à 0,8 % en poids de la composition totale d'un sel d'acide phosphonique.

10. Pastille selon l'une quelconque des revendications précédentes se trouvant en un format de pastilles de 2 g à 700 g au plus, de préférence de pastilles de 20 g à 600 g au plus.

11. Procédé de préparation d'une pastille selon l'une quelconque des revendications 1 à 10 comprenant :
a) le mélange de tous les composants de la composition et
b) le compactage du mélange dans des conditions de pression.

12. Utilisation une pastille selon l'une quelconque des revendications 1 à 10 pour la désinfection d'eau.

13. Utilisation selon la revendication 12 dans laquelle la désinfection d'eau est réalisée dans une piscine ou un spa.

14. Procédé de désinfection à long terme d'eaux dans des piscines ou des spas comprenant :
a) le dépôt d'une ou plusieurs pastilles selon l'une quelconque des revendications 1 à 10 dans le skimmer, les doseurs contournant le filtre, les doseurs flottants ou directement dans l'eau en une proportion de 200 g à 300 g pour 25 m³ d'eau, de manière davantage préférée de 225 g à 275 g pour 25 m³ d'eau et de manière encore davantage préférée en une proportion de 240 à 260 g pour 25 m³ d'eau, et
b) le fait de faire s'écouler l'eau à travers le skimmer pour dissoudre les pastilles.
